# FASCICULE DE BREVET EUROPEEN

(11) **EP 4 308 755 B1**
(45) Date de publication et mention de la délivrance du brevet: **26.02.2025**
(21) Numéro de dépôt: 22712991.3
(22) Date de dépôt: 16.03.2022
(51) Int. Cl.: D03D 25/00, D03D 11/00, B29C 70/32

(54) **PROCÉDÉ DE FABRICATION D'UNE PIÈCE DE TURBOMACHINE EN MATÉRIAU COMPOSITE COMPORTANT UNE ZONE DE RIGIDIFICATION**
VERFAHREN ZUR HERSTELLUNG EINER TURBOMASCHINENKOMPONENTE AUS VERBUNDSTOFF MIT VERSTEIFUNGSZONE
METHOD FOR MANUFACTURING A TURBOMACHINE COMPONENT MADE OF COMPOSITE MATERIAL WITH A STIFFENING ZONE

(30) Priorité: 17.03.2021 FR 2102685
(43) Date de publication de la demande: 24.01.2024
(73) Titulaire: SAFRAN, 75015 Paris (FR)
(72) Inventeur: CHARLEUX, François, 77550 MOISSY-CRAMAYEL (FR); COLOT, Marc-Antoine, 77550 MOISSY-CRAMAYEL (FR)
(74) Mandataire: Gevers & Orès
(86) Numéro de dépôt international: PCT/FR2022/050470
(87) Numéro de publication internationale: WO 2022/195218

(56) Documents cités:
- DE-A1- 10 025 628
- FR-A1- 3 085 299
- US-A1- 2019 160 765

## Description

### DOMAINE TECHNIQUE

L'invention concerne l'intégration d'une zone de rigidification dans une pièce de turbomachine réalisée en matériau composite par tissage de fils en trois-dimensions (3D), telle qu'un carter, qu'une virole de carter intermédiaire (VCI) ou qu'une aube directrice de flux de sortie (OGV, acronyme de « *Out*/*et Guide Vane »).*

### TECHNIQUE ANTÉRIEURE

L'arrière-plan technique comprend notamment les documents FR 3 085 299 A1, US 2019/160765 A1 et DE 100 25 628 A1.

De façon connue, des pièces de turbomachine, telles qu'un carter de soufflante, une VCI, ou une OGV, peuvent être réalisées en matériau composite.

Plus précisément, les pièces composites sont réalisées par tissage en forme, et sont constituées d'une préforme tissée en trois-dimensions (3D), avec par exemple quatre couches de fils de chaîne (les fils de chaîne étant disposés dans le sens de la longueur) et quatre couches de fils de trame (les fils de trame étant disposés dans le sens de la largeur), les fils de chaîne étant liés par les fils de trame suivant un tissage en trois-dimensions.

Afin de renforcer ces pièces de turbomachine, des surépaisseurs peuvent être réalisées dans la préforme tissée en 3D. Par exemple, les titres des fils de chaîne peuvent être augmentés.

Lorsqu'une telle surépaisseur n'est pas suffisante, le nombre de couches de fils de chaîne, et donc le nombre de couches de fils de trame, peut être augmenté, par exemple jusqu'à huit couches de fils de chaîne et de fils de trame. Toutefois, ceci a pour conséquence que l'épaisseur de la pièce est augmentée, puisque ces couches de fils de trame sont présentes sur toute la longueur de la pièce, et non pas uniquement localement à l'endroit où la surépaisseur est souhaitée. Ceci a également pour conséquence une augmentation de la masse de la pièce. En outre, ceci a un impact sur toute la pièce, et non pas seulement sur la zone de la pièce où un renfort est souhaité.

L'augmentation de rigidité d'une pièce, par exemple d'un carter, peut être obtenue par l'ajout d'un raidisseur, c'est-à-dire d'un renfort qui augmente localement l'épaisseur de la pièce. Un raidisseur est une pièce additionnelle, par exemple réalisée en matériau composite, qui est rapportée sur la pièce de turbomachine et assemblée à celle-ci, par exemple par collage. Grâce à un tel raidisseur, la pièce reste à iso-épaisseur en dehors de la zone renforcée.

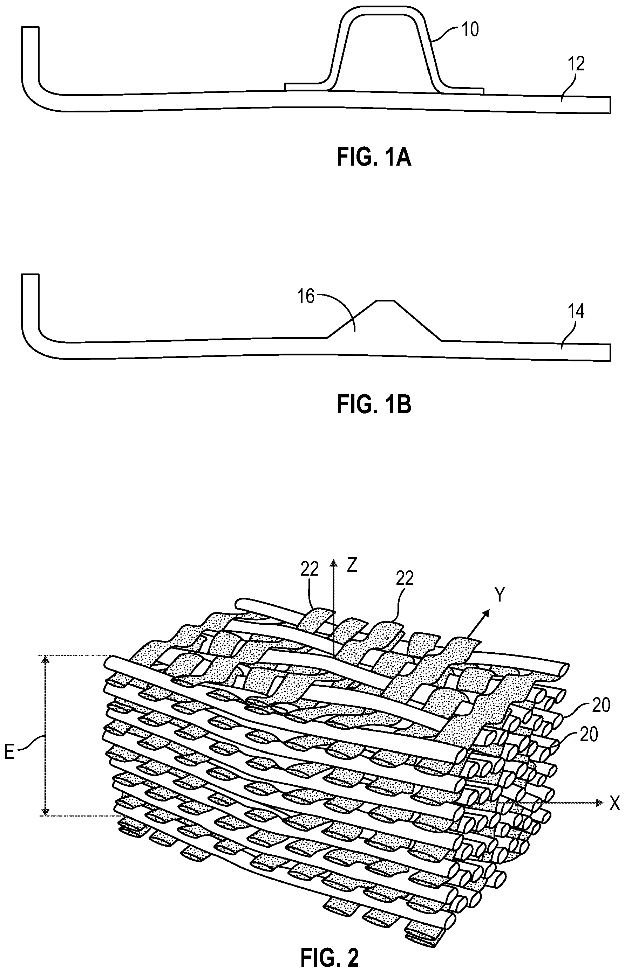

Comme représenté sur la figure 1A, un raidisseur peut être réalisé par collage d'un renfort 10, ici en forme de oméga, sur la pièce 12 de turbomachine. Toutefois, un tel raidisseur est réalisé à part, notamment par drapage et polymérisation, puis est collé sur la pièce 12 après usinage. L'opération de collage peut en outre nécessiter l'utilisation d'un autoclave, qui est un équipement coûteux.

Un raidisseur peut également être réalisé par tissage d'une surépaisseur locale sur la pièce. Toutefois, une telle surépaisseur a un impact sur les zones adjacentes de la pièce, notamment lorsque la pièce est réalisée par tissage en forme. En effet, pour augmenter l'épaisseur de la pièce, il est nécessaire d'ajouter une ou plusieurs couches de fils de chaîne, et donc une ou plusieurs couches de fils de trame. Ceci a un impact sur les autres zones de la pièce que celle où se trouve le raidisseur.

L'invention a pour objectif de proposer une solution permettant de remédier à au moins certains de ces inconvénients.

### RÉSUMÉ DE L'INVENTION

L'invention propose ainsi un procédé de fabrication d'une pièce de turbomachine présentant une surépaisseur de rigidification locale, obtenue par tissage en forme, sans impact sur les zones adjacentes à cette zone de rigidification, et maximisant le module de Young circonférentiel de la pièce de turbomachine.

A cet effet, l'invention concerne un procédé de fabrication d'une pièce de turbomachine en matériau composite, ledit procédé comprenant les étapes consistant en :
- la réalisation d'une préforme fibreuse, par tissage en trois-dimensions de fils de sorte à réaliser une texture fibreuse, qui est enroulée en plusieurs couches superposées sur un mandrin de profil correspondant à celui de la pièce à fabriquer, afin d'obtenir la préforme fibreuse de forme correspondant à celle de la pièce à fabriquer, les fils étant séparés en fils de chaîne et fils de trame, les fils de chaîne étant entrelacés avec les fils de trame suivant un tissage en trois-dimensions, et
- la création d'une zone de rigidification dans la préforme fibreuse.

Selon l'invention, ladite zone de rigidification est formée par au moins une couche de fils de chaîne non entrelacés de fils de trame intercalée entre les fils de chaîne et les fils de trame entrelacés.

Selon l'invention, les fils de chaîne non entrelacés de fils de trame constituant la zone de rigidification sont insérés à coeur, c'est-à-dire sensiblement au milieu de l'épaisseur de la préforme. Ces fils de chaîne supplémentaires sont tissés suivant une armure qui leur induit un embuvage minimum, tandis que les autres fils de chaîne et de trame gardent des trajectoires conduisant à un embuvage équivalent à celui qu'ils auraient si ces fils de chaîne supplémentaires n'étaient pas ajoutés. L'embuvage est le ratio entre la longueur curviligne au sein d'un tissu et la longueur de ce tissu. Ceci permet donc de maximiser le module de Young circonférentiel. En effet, les fils de chaîne et de trame entrelacés forment une déliaison au sein de laquelle sont tissés les fils de chaîne supplémentaires non entrelacés de fils de trame. Comme les fils de chaîne supplémentaires ne sont pas entrelacés de fils de trame, leur embuvage reste minimum.

Le procédé selon l'invention permet donc la réalisation d'un raidisseur, en créant une surépaisseur locale sur la pièce, sans impact sur les zones adjacentes de la pièce. Le raidisseur selon l'invention est plus efficace que les raidisseurs selon l'art antérieur qui peuvent être obtenus par une simple surépaisseur à iso-armure, et donc à iso-embuvage, c'est-à-dire sans gain sur le module de Young. Le raidisseur selon l'invention permet d'augmenter la rigidité circonférentielle de la pièce de turbomachine, et permet donc de maximiser le module de Young circonférentiel de la pièce.

Le raidisseur est formé directement dans la pièce, ce qui permet de limiter les coûts de fabrication de cette dernière. En effet, il n'est pas nécessaire de réaliser le raidisseur à part, puis de l'intégrer dans la pièce.

De préférence, la zone de rigidification ne s'étend pas sur toute la longueur de la pièce. Autrement dit, l'étendue de la surépaisseur de rigidification est de préférence minimum, afin de limiter son effet sur la masse de la pièce.

La zone de surépaisseur est avantageusement peu étendue par rapport aux dimensions de la pièce, afin de ne pas augmenter l'épaisseur de la pièce sur toute sa surface. Par exemple, la zone de surépaisseur constitue moins de 10 % de la surface de la pièce. La limitation de l'étendue de la surépaisseur permet de repasser en armure de base (i.e. en armure en dehors de la zone de rigidification), où tous les fils de chaîne sont entrelacés avec des fils de trame, et donc permet de confiner les fils de chaînes supplémentaires non entrelacés de fils de trame dans leur zone dédiée (i.e. dans la zone de rigidification).

Selon un mode de réalisation, la zone de rigidification est formée par au moins une couche de fils de chaîne non entrelacés de fils de trame, les fils de chaîne de la couche de fils de chaîne non entrelacés de fils de trame ayant une masse linéique (i.e. une quantité de matière par unité de longueur) supérieure à celle des fils de chaîne et des fils de trame entrelacés. Par exemple, la masse linéique des fils de chaîne non entrelacés de fils de trame est deux fois supérieure à la masse linéique des fils de chaîne et des fils de trame entrelacés.

Selon un autre mode de réalisation, la zone de rigidification est formée par une pluralité de couches de fils de chaîne non entrelacés de fils de trame. Ces fils de chaîne non entrelacés de fils de trame ont une masse linéique sensiblement égale à la masse linéique des fils de chaîne et des fils de trame entrelacés.

Le titre des fils de chaîne supplémentaires non entrelacés de fils de trame est fonction de l'épaisseur finale de la pièce souhaitée. Le titre de ces fils de chaîne supplémentaires est distinct du titre des fils de chaîne et de trame entrelacés. Le rapport entre le titre des fils de chaîne supplémentaires non entrelacés de fils de trame et celui des fils de chaîne et de trame entrelacés peut être compris entre 0,25 et 4.

La préforme fibreuse peut comporter N couches de fils de chaîne et M couches de fils de trame entrelacées, N et M étant des entiers supérieurs ou égaux à trois. La zone de rigidification est située entre une première peau formée par N1 couches de fils de chaîne et M1 couches de fils de trame entrelacées, N1 et M1 étant des entiers respectivement inférieurs à N et M, et une seconde peau formée par les N-N1 autres couches de fils de chaîne et les M-M1 autres couches de fils de trame entrelacées.

Autrement dit, le ou les fils de chaîne non entrelacés de fils de trame formant la zone de rigidification sont agencés au milieu de l'épaisseur de la préforme fibreuse.

Selon un mode de réalisation, les entiers N et M sont égaux, par exemple chacun égal à quatre, et la préforme fibreuse comporte donc quatre couches de fils de chaîne et quatre couches de fils de trame entrelacées. De préférence, la zone de rigidification est située entre une première peau formée par deux couches de fils de chaîne et deux couches de fils de trame entrelacées, et une seconde peau formée par les deux autres couches de fils de chaîne et les deux autres couches de fils de trame entrelacées.

Selon un autre mode de réalisation, les entiers N et M sont égaux, par exemple chacun égal à huit, et la préforme fibreuse comporte donc huit couches de fils de chaîne et huit couches de fils de trame entrelacées. De préférence, la zone de rigidification est située entre une première peau formée par quatre couches de fils de chaîne et quatre couches de fils de trame entrelacées, et une seconde peau formée par les quatre autres couches de fils de chaîne et les quatre autres couches de fils de trame entrelacées.

L'invention concerne également une pièce de turbomachine obtenue par le procédé de fabrication selon l'invention, ladite pièce comprenant une zone de rigidification intégrée dans la préforme fibreuse, ladite zone de rigidification étant formée par au moins un fil de chaîne non entrelacé de fils de trame intercalé entre les fils de chaîne et les fils de trame entrelacés de la préforme fibreuse.

La zone de rigidification forme une surépaisseur de raidissement de la pièce. Les fils de chaîne et les fils de trame peuvent être des fibres de matériau composite, par exemple de carbone, verre, aramide ou céramique.

Selon un mode de réalisation, la zone de rigidification est formée par un fil de chaîne non entrelacé de fils de trame ayant une masse linéique supérieure à celle des fils de chaîne et des fils de trame entrelacés.

Selon un autre mode de réalisation, la zone de rigidification est formée par une pluralité de fils de chaîne non entrelacés de fils de trame. Les fils de chaîne non entrelacés de fils de trame ont la même masse linéique que les fils de chaîne et les fils de trame entrelacés.

La pièce de turbomachine obtenue peut être toute pièce axisymétrique, ou de révolution, réalisée par tissage de fils en 3D, et nécessitant un raidissement circonférentiel. Par exemple, la pièce de turbomachine peut être un carter de soufflante, ou une VCI.

La pièce de turbomachine obtenue peut également être une OGV.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig.1A-1B] la figure 1A, déjà décrite, représente très schématiquement une pièce de turbomachine avec un raidisseur intégré selon l'art antérieur tandis que la figure 1B représente très schématiquement une pièce de turbomachine avec un raidisseur intégré selon l'invention ;
[Fig.2] la figure 2 représente schématiquement une armure d'une pièce de turbomachine réalisée par tissage de fils en 3D, sans zone de rigidification ;
[Fig.3] la figure 3 représente schématiquement une armure d'une pièce de turbomachine réalisée par tissage de fils en 3D, avec une zone de rigidification selon un mode de réalisation de l'invention ; et
[Fig.4A-4H] les figures 4A à 4H représentent schématiquement différents plans d'une armure d'une pièce de turbomachine réalisée par tissage de fils en 3D, avec une zone de rigidification selon un mode de réalisation de l'invention.

Les éléments ayant les mêmes fonctions dans les différentes mises en oeuvre ont les mêmes références dans les figures.

### DESCRIPTION DES MODES DE RÉALISATION

Comme représenté sur la figure 1B, une pièce 14 de turbomachine en matériau composite comprend une zone de rigidification 16.

La pièce peut être tubulaire, et par exemple être un carter de soufflante ou une VCI. La pièce de turbomachine peut être tout autre pièce axisymétrique réalisée par tissage de fils en 3D, et nécessitant un raidissement circonférentiel. La pièce peut également être une OGV.

La pièce de turbomachine est réalisée à partir d'une préforme en matériau composite à renfort fibreux densifiée par une matrice, par exemple en polymère.

La pièce est réalisée par un procédé de fabrication selon l'invention tel que décrit ci-après.

Le procédé comprend une étape de réalisation d'une préforme fibreuse, par tissage de fils en 3D de sorte à réaliser une texture fibreuse, qui est enroulée en plusieurs couches superposées sur un mandrin de profil correspondant à celui de la pièce à fabriquer, afin d'obtenir la préforme fibreuse de forme correspondant à celle de la pièce à fabriquer. Les fils sont séparés en fils de chaîne et fils de trame, et les fils de chaîne sont entrelacés avec les fils de trame suivant un tissage en 3D.

La texture fibreuse est tissée sur un tambour, puis est enroulée autour d'un mandrin, le mandrin ayant un profil correspondant à celui de la pièce à réaliser, de sorte à obtenir la préforme fibreuse souhaitée. Plus précisément, la texture fibreuse se présente sous forme d'une bande, réalisée par tissage 3D de fils de chaîne et de fils de trame, qui est enroulée sur plusieurs tours autour du mandrin afin de former la préforme fibreuse. Le mandrin présente une surface externe dont le profil correspond à la surface interne de la pièce à réaliser.

Le tissage 3D est réalisé avec appel des fils de chaîne sur le tambour, dont le profil est choisi en fonction de la pièce à réaliser. Ainsi, les fils de chaîne peuvent être appelés par le tambour, et la texture fibreuse est enroulée sur le tambour au fur et à mesure du tissage.

Le tissage 3D de la texture fibreuse peut être réalisé avec une armure de type interlock à plusieurs couches de fils de chaîne et de fils de trame. Un tissage 3D avec armure interlock est un tissage dans lequel chaque fil de chaîne relie entre elles plusieurs couches de fils de trame par entrelacement. Bien entendu, d'autres armures de tissage sont envisageables.

Par enroulement autour du mandrin, la texture fibreuse épouse le profil de celuici. Le nombre de couches de la texture fibreuse enroulées de sorte à former la préforme fibreuse est fonction de l'épaisseur de la pièce souhaitée, et de l'épaisseur de la texture fibreuse. Il est de préférence supérieur ou égal à deux. La préforme fibreuse peut, une fois enroulée autour d'un mandrin de forme cylindrique, être de forme tubulaire de sorte à permettre de former une pièce de forme tubulaire. Les fils de chaîne de la texture fibreuse sont enroulés dans la direction circonférentielle, ce qui permet de donner de la résistance mécanique à la pièce.

La préforme fibreuse est maintenue sur le mandrin, puis est imprégnée par une résine, qui est ensuite polymérisée. Plus précisément, des contre-moules sont disposés autour de la préforme fibreuse maintenue sur le mandrin, et la préforme fibreuse est enfermée dans les contre-moules de manière étanche. Puis l'ensemble est transporté jusqu'à une étuve ou un four dans lequel la préforme est densifiée par une matrice. La densification de la préforme fibreuse consiste à combler la porosité de la préforme, dans tout ou partie du volume de celle-ci, par le matériau constitutif de la matrice. La matrice est obtenue par injection de la résine dans la préforme fibreuse, et polymérisation de celle-ci, par traitement thermique.

La densification de la préforme fibreuse peut être réalisée par un procédé de moulage par transfert (RTM, acronyme de l'expression anglaise « Resin Transfert Moulding »). Plus précisément, la préforme fibreuse est placée dans un moule présentant la forme de la pièce à réaliser. Une résine thermodurcissable est injectée dans l'espace interne délimité entre le mandrin et le moule, et qui comprend la préforme fibreuse. Un gradient de pression est établi dans cet espace interne entre l'endroit où est injecté la résine et les orifices d'évacuation de celle-ci, afin de contrôler et d'optimiser l'imprégnation de la préforme fibreuse par la résine.

La pièce est ensuite démoulée, puis détourée de sorte à enlever l'excès de résine. La pièce de turbomachine est ainsi obtenue après usinage de finition.

La figure 2 représente une armure, c'est-à-dire un mode d'entrecroisement ou d'entrelacement des fils de chaîne et des fils de trame, de la pièce de turbomachine. Les fils de chaîne 20 s'étendent longitudinalement selon l'axe X, tandis que les fils de trame 22 s'étendent longitudinalement selon l'axe Y. Les fils de chaîne 20 et les fils de trame 22 définissent des couches de fils, qui s'empilent selon l'axe Z, et qui définissent l'épaisseur E de la préforme fibreuse. Sur la figure 2, il y a huit couches de fils de chaîne 20 et huit couches de fils de trame 22. Les fils de chaîne 20 sont entrelacés avec les fils de trame 22 suivant un tissage en trois dimensions. Sur cette figure 2, le mode d'entrecroisement des fils de chaîne et des fils de trame est représenté en dehors d'une zone de rigidification.

Le procédé comprend également une étape de création d'une zone de rigidification dans la préforme fibreuse. La zone de rigidification est formée par insertion d'au moins une couche de fils de chaîne non entrelacés de fils de trame, et qui est intercalée entre les fils de chaîne et les fils de trame entrelacés. C'est la préforme fibreuse comprenant la ou les zones de rigidification qui est enroulée sur le mandrin, de sorte à former la pièce de turbomachine, en une seule pièce, avec des zones de rigidification.

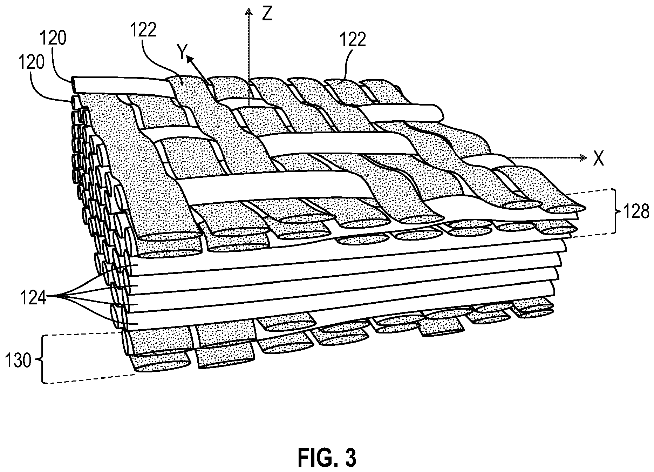

La figure 3 représente une armure de la pièce de turbomachine dans la zone de rigidification selon l'invention. Comme précédemment, les fils de chaîne 120 s'étendent longitudinalement selon l'axe X, les fils de trame 122 s'étendent longitudinalement selon l'axe Y, et les fils de chaîne 120 et de trame 122 définissent des couches de fils, qui s'empilent selon l'axe Z, de sorte à définir l'épaisseur de la préforme fibreuse. Les fils de chaîne 120 et les fils de trame 122 peuvent être des fibres de matériau composite, par exemple de carbone de sorte que la pièce obtenue est réalisée en carbone. Sur cette figure, il y a huit couches de fils de chaîne 120 et quatre couches de fils de trame 122. Sur la figure 3, un mode d'entrecroisement des fils de chaîne et des fils de trame dans la zone de rigidification est représenté.

Dans l'exemple représenté sur la figure 3, la zone de rigidification est formée par une pluralité de couches de fils de chaîne non entrelacés de fils de trame 124, au nombre de quatre dans l'exemple illustré. Ces fils de chaîne non entrelacés de fils de trame 124 ont la même masse linéique que les fils de chaîne 120 et les fils de trame 122 entrelacés. Le nombre de fils de chaîne non entrelacés de fils de trame 124, leur nature et leurs dimensions est fonction de la pièce de turbomachine souhaitée.

De façon générale, la préforme fibreuse peut comporter N couches de fils de chaîne 120 et M couches de fils de trame 122 entrelacés, N et M étant des entiers supérieurs ou égaux à trois. La zone de rigidification est située entre une première peau formée par N1 couches de fils de chaîne et M1 couches de fils de trame entrelacées, N1 et M1 étant des entiers respectivement inférieurs à N et M, et une seconde peau formée par les autres couches de fils de chaîne (égales à N-N1) et les autres couches de fils de trame entrelacées (égales à M-M1).

De préférence, les entiers N et M sont égaux et de préférence pairs afin que la zone de rigidification soit intégrée entre deux peaux comportant le même nombre de couches de fils de chaine et de couches de fils de trame entrelacés.

Sur la figure 3, N et M sont égaux à quatre. La zone de rigidification est intégrée entre une première peau 128 formée par N/2 (ici deux) couches de fils de chaîne 120 et M/2 (ici deux) couches de fils de trame 122 entrelacés, et une seconde peau 130 formée par les N/2 autres couches de fils de chaîne 120 et les M/2 autres couches de fils de trame 122 entrelacés.

Le nombre de couches de fils de chaîne et de couches de fils de trame dans chaque peau est fonction de la préforme fibreuse souhaitée. En particulier, dans le cas d'une armure comportant quatre couches de fils de chaîne et quatre couches de fils de trame entrelacés, les couches de fils sont séparées en deux peaux comportant chacune deux couches de fils de chaîne et deux couches de fils de trame entrelacés, mais dans le cas d'une armure comportant huit couches de fils de chaîne et huit couches de fils de trame entrelacés, les couches de fils sont séparées en deux peaux comportant chacune quatre couches de fils de chaîne et quatre couches de fils de trame entrelacés. Ainsi, la ou les couches de fils de chaîne non entrelacés de fils de trame 124 sont agencés au milieu de l'épaisseur de la préforme fibreuse. Plus précisément, les quatre couches de fils de chaîne 120 et quatre couches de fils de trame 122 entrelacés se séparent en deux peaux formées chacune de deux couches de fils de chaîne 120 et deux couches de fils de trame 122 entrelacés, ce qui permet d'insérer entre ces deux peaux 128, 130, une ou des couches de fils de chaîne supplémentaires ne nécessitant pas de fils de trames.

Le ou les fils de chaîne 124 n'étant pas entrelacés par des fils de trame, ils sont sans embuvage, et donc comparables à des fils unidirectionnels dans le cas de pièces en matériau composite tissées en deux-dimensions (2D).

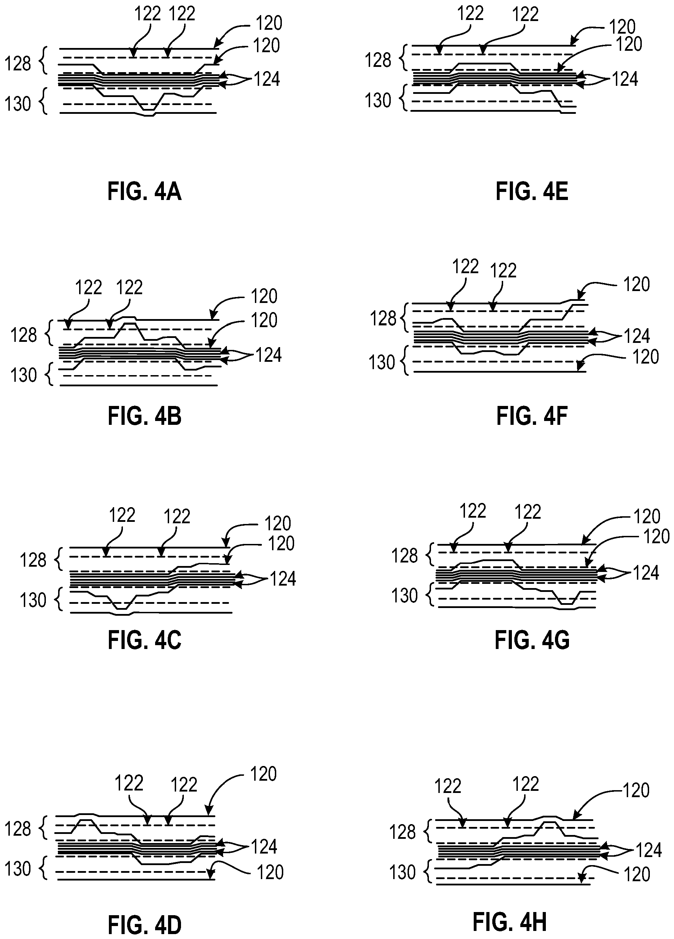

Les figures 4A à 4H représentent différents plans de l'armure de la figure 3. Sur ces figures, est représenté le mode d'entrecroisement des fils de chaîne 120 avec les fils de trame 122. Des fils de chaîne supplémentaires non entrelacés de fils de trame 124 sont insérés au coeur des couches de fils de chaîne 120 et de fils de trame 122 entrelacés. Plus précisément, les couches de fils de chaîne 120 et de fils de trame 122 sont séparées en deux peaux 128, 130, chacune comportant deux couches de fils de chaîne 120 et deux couches de fils de trame 122 entrelacés, et entre ces peaux 128, 130, sont insérés les couches de fils de chaîne non entrelacés de fils de trame 124. Dans l'exemple illustré quatre couches de fils de chaîne non entrelacés de fils de trame sont insérées entre les deux peaux 128, 130. La surépaisseur qui constitue la zone de rigidification est ainsi formée par ces fils de chaîne non entrelacés de fils de trame 124.

Afin de maximiser le module de Young circonférentiel dans le sens des fils de chaîne, le tissage 3D de la préforme fibreuse est réalisé avec l'armure selon la figure 3 dans la zone de rigidification, et avec une armure de base (une armure comme celle de la figure 2, mais avec seulement quatre couches de fils de chaîne et quatre couches de fils de trame entrelacés au lieu des huit couches de fils comme représenté sur la figure 2) pour les zones de la pièce en dehors de la zone de rigidification. Ainsi, la pièce conserve le même aspect extérieur du tissage dans et hors de la zone de rigidification, tout en minimisant l'embuvage du ou des fils de chaîne non entrelacés de fils de trame 124 dans la zone de rigidification.

Par rapport à une préforme fibreuse tissée en 3D avec armure de base (avec huit couches de fils de chaîne et huit couches de fils de trame entrelacés, les fils ayant un nombre de filaments par section de 48k), le module de Young circonférentiel d'une préforme fibreuse tissée en 3D avec une armure selon la figure 3 (avec deux peaux de deux couches de fils de chaîne et de fils de trame entrelacés, les fils ayant un nombre de filaments par section de 48k, et avec deux couches de fils de chaîne supplémentaires non entrelacés de fils de trame de 48k), présente un gain d'au moins 40 %.

## Revendications

1. Procédé de fabrication d'une pièce de turbomachine en matériau composite, ledit procédé comprenant les étapes consistant en :
- la réalisation d'une préforme fibreuse, par tissage en trois-dimensions de fils de sorte à réaliser une texture fibreuse, qui est enroulée en plusieurs couches superposées sur un mandrin de profil correspondant à celui de la pièce à fabriquer, afin d'obtenir la préforme fibreuse de forme correspondant à celle de la pièce à fabriquer, les fils étant séparés en fils de chaîne (120) et fils de trame (122), les fils de chaîne étant entrelacés avec les fils de trame suivant un tissage en trois-dimensions,
- la création d'une zone de rigidification dans la préforme fibreuse,
**caractérisé en ce que** ladite zone de rigidification étant formée par au moins une couche de fils de chaîne non entrelacés de fils de trame (124) intercalée entre les fils de chaîne et les fils de trame entrelacés.

2. Procédé selon la revendication 1, dans lequel la zone de rigidification est formée par une couche de fils de chaîne non entrelacés de fils de trame (124), les fils de chaîne de la couche de fils de chaîne non entrelacés de fils de trame ayant une masse linéique supérieure à celle des fils de chaîne et des fils de trame entrelacés.

3. Procédé selon la revendication 1, dans lequel la zone de rigidification est formée par une pluralité de couches de fils de chaîne non entrelacés de fils de trame (124).

4. Procédé selon l'une des revendications 1 à 3, dans lequel la préforme fibreuse comporte N couches de fils de chaîne (120) et M couches de fils de trame (122) entrelacées, N et M étant des entiers supérieurs ou égaux à trois, la zone de rigidification étant située entre une première peau (128) formée par N1 couches de fils de chaîne et M1 couches de fils de trame entrelacées, N1 et M1 étant des entiers respectivement inférieurs à N et M, et une seconde peau (130) formée par les N-N1 autres couches de fils de chaîne et les M-M1 autres couches de fils de trame entrelacées.

5. Pièce de turbomachine obtenue par le procédé de fabrication selon l'une des revendications 1 à 4, ladite pièce comprenant une zone de rigidification intégrée dans la préforme fibreuse, ladite zone de rigidification étant formée par au moins une couche de fils de chaîne non entrelacés de fils de trame (124) intercalé entre les fils de chaîne (120) et les fils de trame (122) entrelacés de la préforme fibreuse.

6. Pièce de turbomachine selon la revendication 5, dans laquelle la zone de rigidification forme une surépaisseur de raidissement de la pièce.

7. Pièce de turbomachine selon l'une des revendications 5 ou 6, dans lequel les fils de chaîne (120) et les fils de trame (122) sont des fibres de matériau composite.

8. Pièce de turbomachine selon la revendication 5 à 7, dans lequel la zone de rigidification est formée par une couche de fils de chaîne non entrelacés de fils de trame (124) ayant une masse linéique supérieure à celle des fils de chaîne (120) et des fils de trame (122) entrelacés.

9. Pièce de turbomachine selon la revendication 5 à 7, dans lequel la zone de rigidification est formée par une pluralité de couches de fils de chaîne non entrelacés de fils de trame (124).

10. Pièce de turbomachine selon la revendication 5 à 9, dans laquelle la pièce est un carter, ou une virole de carter intermédiaire, ou une aube directrice de flux de sortie.

## Patentansprüche

1. Verfahren zur Herstellung eines Turbomaschinenteils aus Verbundmaterial, wobei das Verfahren die Schritte umfasst, bestehend aus:
- der Ausführung einer faserigen Vorform durch dreidimensionales Weben von Fäden, um eine faserige Textur zu bilden, die in mehreren übereinanderliegenden Schichten auf einen Dorn mit einem Profil, das dem des herzustellenden Teils entspricht, gewickelt wird, um die faserige Vorform mit einer Form zu erhalten, die der des herzustellenden Teils entspricht, wobei die Fäden in Kettfäden (120) und Schussfäden (122) getrennt werden, wobei die Kettfäden mit den Schussfäden gemäß einem dreidimensionalen Weben verwoben werden,
- der Erzeugung einer Versteifungszone in der faserigen Vorform,
**dadurch gekennzeichnet, dass** die Versteifungszone durch mindestens eine Schicht aus nicht mit Schussfäden verwobenen Kettfäden (124) gebildet wird, die zwischen den verwobenen Kettfäden und Schussfäden eingefügt ist.

2. Verfahren nach Anspruch 1, wobei die Versteifungszone durch eine Schicht aus nicht verwobenen Kettfäden aus Schussfäden (124) gebildet wird, wobei die Kettfäden der Schicht aus nicht verwobenen Kettfäden aus Schussfäden eine höhere Feinheit aufweisen als die der verwobenen Kettfäden und Schussfäden.

3. Verfahren nach Anspruch 1, wobei die Versteifungszone durch eine Vielzahl von Schichten aus Kettfäden gebildet wird, die nicht mit Schussfäden (124) verwoben sind.

4. Verfahren nach einem der Ansprüche 1 bis 3, wobei die faserige Vorform N Schichten aus Kettfäden (120) und M Schichten aus Schussfäden (122) umfasst, die miteinander verwoben sind, wobei N und M ganze Zahlen größer oder gleich drei sind, wobei die Versteifungszone zwischen einer ersten Haut (128), die durch N1 Schichten von Kettfäden und M1 Schichten aus verwobenen Schussfäden gebildet wird, wobei N1 und M1 ganze Zahlen kleiner als N bzw. M sind, und einer zweiten Haut (130), die durch die N-N1 anderen Schichten aus Kettfäden und die M-M1 anderen Schichten aus verwobenen Schussfäden gebildet wird, angeordnet ist.

5. Turbomaschinenteil, das durch das Herstellungsverfahren nach einem der Ansprüche 1 bis 4 erhalten wird, wobei das Teil eine Versteifungszone umfasst, die in die faserige Vorform integriert ist, wobei die Versteifungszone durch mindestens eine Schicht aus nicht verwobenen Kettfäden aus Schussfäden (124) gebildet wird, die zwischen den verwobenen Kettfäden (120) und Schussfäden (122) der faserigen Vorform eingefügt sind.

6. Turbomaschinenteil nach Anspruch 5, wobei die Versteifungszone eine Verdickung zur Versteifung des Teils bildet.

7. Turbomaschinenteil nach einem der Ansprüche 5 oder 6, wobei die Kettfäden (120) und die Schussfäden (122) Fasern aus einem Verbundmaterial sind.

8. Turbomaschinenteil nach Anspruch 5 bis 7, wobei die Versteifungszone durch eine Schicht aus nicht verwobenen Kettfäden aus Schussfäden (124) gebildet ist, die eine höhere Feinheit als die verwobenen Kettfäden (120) und Schussfäden (122) aufweisen.

9. Turbomaschinenteil nach Anspruch 5 bis 7, wobei die Versteifungszone durch eine Vielzahl von Schichten aus nicht verwobenen Kettfäden aus Schussfäden (124) gebildet ist.

10. Turbomaschinenteil nach Anspruch 5 bis 9, wobei das Teil ein Gehäuse oder ein Zwischengehäusering oder eine Austrittsstromleitschaufel ist.

## Claims

1. A method for manufacturing a turbomachine component made of composite material, said method comprising the steps consisting in:
- producing a fibrous preform by three-dimensional weaving of filaments so as to produce a fibrous texture, which is wound in a plurality of superposed layers on a mandrel with a profile corresponding to that of the component to be manufactured, in order to obtain the fibrous preform with a shape corresponding to that of the component to be manufactured, the filaments being separated into warp filaments (120) and weft filaments (122), the warp filaments being interwoven with the weft filaments in a three-dimensional weaving,
- creating a stiffening zone in the fibrous preform,
**characterised in that** said stiffening zone is formed by at least one layer of warp filaments not interwoven with weft filaments (124) interposed between the warp filaments and the weft filaments that are interwoven.

2. The method according to claim 1, wherein the stiffening zone is formed by a layer of warp filaments that are not interwoven with weft filaments (124), the warp filaments of the layer of warp filaments not interwoven with weft filaments having a linear mass greater than that of the warp filaments and the weft filaments that are interwoven.

3. The method according to claim 1, wherein the stiffening zone is formed by a plurality of layers of warp filaments that are not interwoven with weft filaments (124).

4. The method according to one of claims 1 to 3, wherein the fibrous preform comprises N layers of warp filaments (120) and M layers of weft filaments (122) that are interwoven, N and M being integers greater than or equal to three, the stiffening zone being located between a first skin (128) formed by N1 layers of warp filaments and M1 layers of weft filaments that are interwoven, N1 and M1 being integers respectively less than N and M, and a second skin (130) formed by the other N-N1 layers of warp filaments and the other M-M1 layers of weft filaments that are interwoven.

5. A turbomachine component obtained by the manufacturing method according to one of claims 1 to 4, said component comprising a stiffening zone integrated into the fibrous preform, said stiffening zone being formed by at least one layer of warp filaments non-interwoven with weft filaments (124) interposed between the warp filaments (120) and the weft filaments (122) of the fibrous preform that are interwoven.

6. The turbomachine component as claimed in claim 5, wherein the stiffening zone forms an allowance for stiffening the component.

7. The turbomachine component according to one of claims 5 or 6, wherein the warp filaments (120) and the weft filaments (122) are fibres of composite material.

8. The turbomachine component according to claims 5 to 7, wherein the stiffening zone is formed by a layer of warp filaments non-interwoven with weft filaments (124) having a linear mass greater than that of the warp filaments (120) and of the weft filaments (122) that are interwoven.

9. The turbomachine component according to claims 5 to 7, wherein the stiffening zone is formed by a plurality of layers of warp filaments not-interwoven with weft filaments (124).

10. The turbomachine component as claimed in claims 5 to 9, wherein the component is a casing, or an intermediate casing shell, or an outlet flow guide vane.
